# DEMANDE DE BREVET EUROPEEN

(11) **EP 0 816 707 A1**
(43) Date de publication de la demande: **07.01.1998**
(21) Numéro de dépôt: 96110411.4
(22) Date de dépôt: 27.06.1996
(51) Int. Cl.: F16D 69/02, D04H 1/42

(54) **Matériau de frottement destiné à équiper un dispositif mettant en oeuvre un frottement à sec, ainsi que le procédé de réalisation d'un tel matériau de frottement et du dispositif qui en est équipé, notamment pour véhicule automobile**

(71) Demandeur: VALEO, 75017 Paris (FR)
(72) Inventeur: Guerin, Richard, 61100 Flers de L'Orne (FR); Jacq, Gérard, 61430 Athis de L'Orne (FR)
(74) Mandataire: Lemaire, Marc

(57) **Abrégé**

Un matériau de frottement destiné à équiper un dispositif mettant en oeuvre un frottement à sec, plus particulièrement un disque d'embrayage ou de frein selon l'invention, est constitué par un mat de fibres imprégné d'une résine thermodurcissable, lesdites fibres présentant une longueur au moins égale à 40 mm.

## Description

La présente invention a pour objet un matériau de frottement destiné à équiper un dispositif mettant en oeuvre un frottement à sec, ainsi que le procédé de réalisation d'un tel matériau de frottement et du dispositif qui en est équipé.

Plus particulièrement un tel matériau de frottement se présente sous la forme d'un anneau plat et le dispositif qui en est équipé est un disque d'embrayage ou de frein.

Les matériaux de frottement à sec utilisés à ce jour sont de trois types principaux : les matériaux à base de fils, les matériaux à base de fils tissés et les matériaux moulés.

Les matériaux à base de fils ou à base de fils tissés sont constitués essentiellement de fils ayant un rôle de renfort, imprégnés de résine thermodurcissable, de caoutchouc et de charges diverses.

Les matériaux de ce type présentent divers inconvénients. Leur élaboration nécessite l'emploi de solvants nocifs et des dispositions particulières doivent être prévues afin d'éviter tout échappement de solvant dans le milieu naturel.

On a proposé de remplacer les solvants nocifs par de l'eau, mais dans ce cas aussi il convient d'assurer la purification de l'eau ou de la vapeur rejetée en fin de procédé d'élaboration.

Ces dispositions qui compliquent et rendent onéreux les procédés de fabrication n'ont toutefois pas une efficacité totale.

Les matériaux moulés qui sont généralement obtenus par voie humide selon un procédé de mélangeage présentent également ce même type d'inconvénient.

En outre les procédés utilisés ne permettent l'utilisation que de fibres de renforcement relativement courtes (longueur moyenne inférieure à cinq millimètres). De ce fait les matériaux de frottement moulés présentent une résistance insuffisante à la centrifugation en particulier à chaud, ce qui les rend impropres à une utilisation dans un disque de friction d'embrayage à sec qui est entraîné en rotation à des vitesses pouvant dépasser 6000 tours/minute.

La présente invention a pour but de pallier les inconvénients précités en proposant un matériau de frottement à sec qui présente des caractéristiques techniques améliorées, un prix de revient inférieur à celui de matériaux connus et dont l'élaboration, non seulement n'entraîne pas de rejets polluants dans le milieu naturel, mais permet de recycler des matériaux de frottement usés ainsi que des résidus d'usinage de matériaux de frottement neufs.

Elle a également pour objet de proposer un matériau de frottement à sec qui présente un coefficient de frottement stable ainsi qu'une bonne résistance à l'usure.

Un matériau de frottement à sec selon l'invention, est caractérisé en ce qu'il est constitué par un mat de fibres imprégné d'une résine thermodurcissable et en ce que lesdites fibres présentent une longueur au moins égale à 40 mm.

Selon d'autres caractéristiques prises séparément ou en combinaison :
- la longueur moyenne des fibres est au plus égale à 120 mm ;
- les fibres sont choisies parmi le groupe des fibres de coton, de viscose, de lin, de polyacrylonitrile, de polyacrylonitrile préoxydées, de para-aramide, de méta-aramide, des fibres minérales : verre E-C-R, laine de roche, céramique ;
- du verre est incorporé au mat sous forme de silionne, et/ou de roving, et/ou texturisé ou voluminisé ;
- les diamètres de fibres de verre sont compris entre 6 et 21 micromètres ;
- les fibres de verre ont subi un adhérisage, une imprégnation de résine phénolique, une imprégnation de caoutchouc;
- des charges poudreuses sont incorporées au mat, elles comprennent tout ou partie des éléments ou composés suivants : cuivre, laine de roche, caoutchouc nitrile en poudre, noir de carbone, hexaméthylène tétramine, gilsonite, litharge, résine mélamine, résine phénolique, soufre, cardolite, silicate de zirconium, sulfure de fer, alumine, latex, garnitures d'embrayages usagées réduites en poudre, poussières de rectification de garnitures de frottement, oxyde de zinc.

Des charges fibreuses courtes peuvent être incorporées au mat ou être présentes dans ce dernier.

Le procédé de réalisation du matériau de frottement à sec, selon l'invention, est caractérisé par les étapes suivantes :
a) un mélange de fibres de même nature ou de matières différentes telles que définies ci-dessus, est réalisé dans un mélangeur ;
b) le mélange est cardé pour former un voile de carde ;
c) le voile de carde est nappé ;
d) du verre est incorporé au voile de carde au moment du nappage ;
e) le mat est pré-aiguilleté ou condensé ;
   - entre les étapes b) et c) ci-dessus, des charges pulvérulentes sont saupoudrées sur le voile de carde ;
   - le cardage est effectué au moyen d'une carde type laine ;
f) le mat est mis à une épaisseur comprise entre 3 mm et 10 mm entre des plateaux chauffants ;
   - la température est comprise entre 50°C et 100°C ;
   - la pression est comprise entre 1 bar et 10 bars ;
g) le mat est découpé en bandes dans le sens largeur ;
   - la largeur des bandes est comprise entre 100 mm et 450 mm ;
h) les bandes ainsi découpées sont soudées par lames chauffantes ;
   - la température des lames est comprise entre 50°C et 100° C;
   - le recouvrement des bandes ainsi soudées est compris entre 3 mm et 20 mm ;
i) la bande soudée est enroulée sur un enrou- leur ;
j) de cette bande est formé un tube dont le diamètre intérieur est obtenu par un mandrin à diamètre modulable, et dont le diamètre extérieur est obtenu par une longueur de défilement appropriée ;
   - le diamètre intérieur est compris entre 100 mm et 250 mm ;
   - le diamètre extérieur est compris entre 140 mm et 450 mm ;
   - l'enroulage de cette bande est effectué en contact par cylindres chauffants ;
k) un anneau est découpé dans ce tube ainsi réalisé ;
   - la hauteur de cet anneau est comprise entra 8 mm et 25 mm ;
   - la découpe de cet anneau est réalisée par des couteaux de refente ;
l) l'anneau est placé dans le fond d'un moule ;
m) une cuisson sous pression est réalisée dans le moule ;
   - la température de cuisson est comprise entre 150 ° C et 250°C ;
   - la pression appliquée sur le matériau varie entre 20 bars et 300 bars.

L'invention a également pour objet un disque de friction d'embrayage tournant mettant en oeuvre un frottement à sec, comportant au moins une garniture de frottement, et de préférence deux disposées de part et d'autre d'un support, caractérisé en ce que ladite garniture de frottement est réalisée en un matériau de frottement défini ci-dessus, obtenu selon le procédé ci-dessus.

D'autres caractéristiques et avantage du produit et du procédé apparaîtront à la lecture de la description qui suit, d'exemples de réalisation et de mise en oeuvre de l'invention, en regard des dessins annexés qui présentent :
- à la figure 1, le schéma de principe d'une première partie de l'installation destinée à mettre en oeuvre le procédé selon l'invention ;
- à la figure 2, le schéma de principe d'une seconde partie de cette installation.

Trois mats de fibres (exemple A, B, C) sont réalisés à partir des compositions pondérales de fibres suivantes :

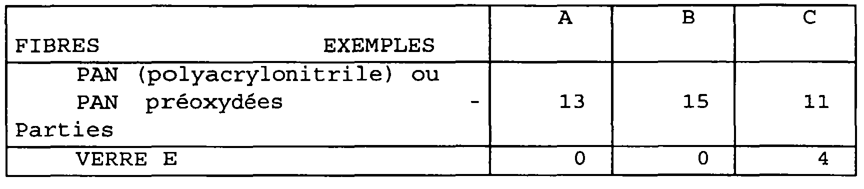

La longueur moyenne des fibres utilisées est la suivante :
- fibres PAN : 42 mm ;
- fibres de verre : 40 mm ;

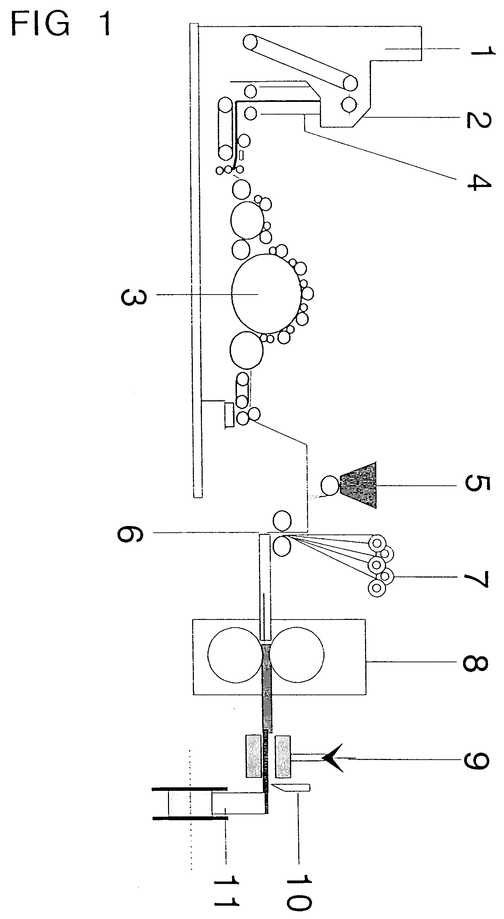

Les fibres ou mélange de fibres ci-dessus réalisés dans un mélangeur, sont introduits dans la chargeuse 1 (figure 1) d'un dispositif d'alimentation 2 d'une carde 3 de type laine qui comporte une cheminée d'alimentation 4.

Des charges pulvérulentes sont saupoudrées en sortie de la carde 3, sur le voile de carde formé, au moyen d'un dispositif de saupoudrage 5.

Les charges pulvérulentes présentent la composition suivante (composition pondérale rapportée aux parties de fibres ci-dessus):

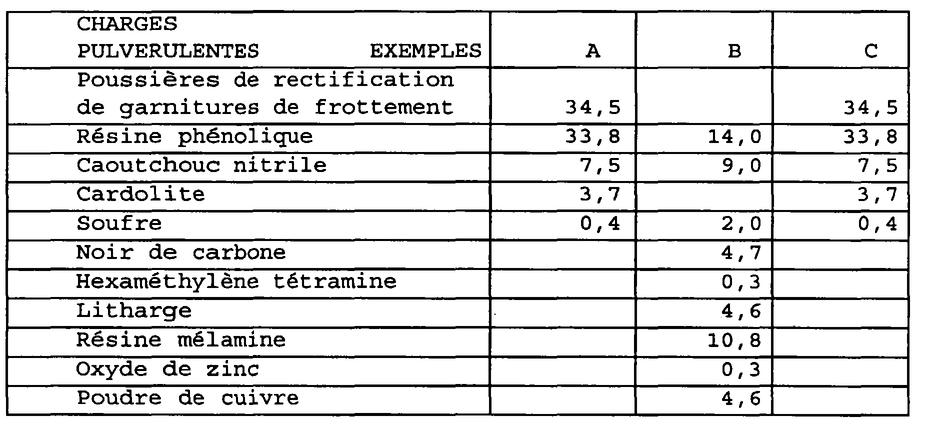

Le verre est incorporé au voile de carde formé, au moyen d'un cantre d'alimentation 7.

Le verre présente la composition suivante (composition pondérale rapportée aux parties pondérales de fibres et de charges pulvérulentes ci-dessus) :

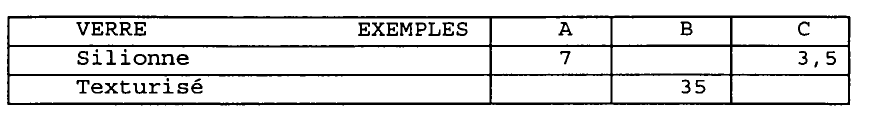

Le verre utilisé est du verre E dont le diamètre moyen est :
- Fil de verre continu (silione) : 9 micromètres ;
- Fil de verre défibrillisé : 12 micromètres.

Le voile de carde est ensuite nappé au moyen d'un nappeur 6, la nappe ainsi formée subit un traitement de pré-aiguilletage à rouleaux 8.

Le mat de non tissé ainsi réalisé est dans l'exemple représenté, mis à épaisseur entre plateaux chauffants 9.

Le mat ainsi comprimé dans l'exemple représenté, est découpé par une guillotine dans le sens de la lar-geur 10.

Les bandes découpées dans l'exemple représenté, sont soudées par une lame chauffante et enroulées en un rouleau 11 en sortie de première partie de l'installation.

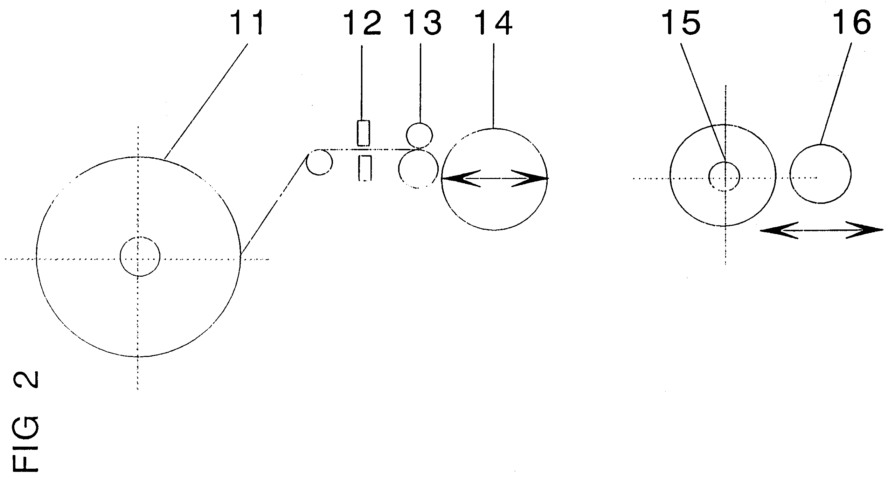

Le rouleau 11 est porté dans une seconde partie d'installation et est dévidé pour la suite du procédé d'élaboration du matériau de frottement (figure 2).

Un tube 14, dans l'exemple représenté, est formé par contact de cylindres chauffants 13.

Le diamètre intérieur du tube 14 est défini au moyen d'un mandrin à diamètre modulable à bagues 15.

Le diamètre extérieur du tube 14 est défini au moyen d'un contrôleur de défilement 12.

Le tube 14 est découpé en plusieurs anneaux par des couteaux de refente 16.

La largeur moyenne des anneaux est de 15 mm.

Chaque anneau découpé est placé dans un moule qui présente, selon l'équipement auquel est destiné le matériau de frottement, un fond plat, rainuré ou non.

Une cuisson sous pression est réalisée dans le moule.

Le moule est ouvert et l'anneau ainsi réalisé est refroidi.

Cet anneau est ébavuré par meulage.

Cet anneau est surcuit en tunnel suivant un cycle de montée à différentes températures.

Cet anneau ainsi surcuit subit des opérations de mise à épaisseur, perçage et lamage.

Les résidus de mise à épaisseur, perçage, lamage sont récupérés afin de pouvoir être réutilisés ultérieurement.

Trois séries de deux disques de friction d'embrayage réalisés conformément à l'invention à partir des compositions des exemples A, B, C précédents ont subi des tests d'endurance dans les conditions indiquées ci-après.

Deux disques d'une même série, correspondant à un même exemple de réalisation, sont placés dans une machine d'essais du type défini par la norme ECF 07005.

L'essai comporte quatre séries de cycles.

Chaque cycle consiste à freiner, jusqu'à arrêt, une masse d'inertie préalablement lancée à une vitesse de rotation de 3000 tours/minute.

La première série comprend 500 cycles, l'inertie étant de 43 kJ.

La deuxième série comprend 1000 cycles, l'inertie étant de 43 kJ.

La troisième série comprend 1000 cycles, l'inertie étant de 62 kJ.

La quatrième série comprend 500 cycles, l'inertie étant de 81 kJ.

L'évolution du coefficient de frottement dynamique de chacun des trois échantillons au cours des cycles d'endurance ci-dessus est indiquée dans le tableau ci-dessous.

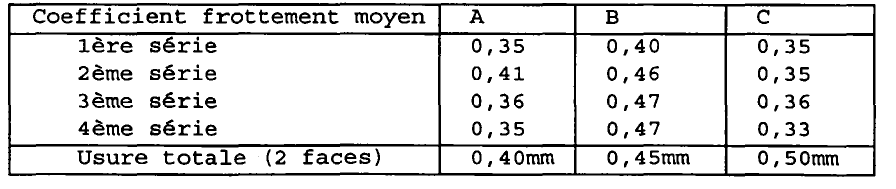

On constate que le matériau de frottement, selon l'invention, a une stabilité remarquable du coefficient de friction du matériau.

De plus on constate que la matériau de frottement, selon l'invention, n'a subi qu'une très faible usure.

## Revendications

1. Matériau de frottement destiné à équiper un dispositif mettant en oeuvre un frottement à sec, plus particulièrement un disque d'embrayage ou de frein, caractérisé en ce qu'il est constitué par un mat de fibres imprégné d'une résine thermodurcissable et en ce que lesdites fibres présentent une longueur au moins égale à 40 mm.

2. Matériau de frottement selon la revendication 1, caractérisé en ce que la longueur moyenne des fibres est au plus égale à 120 mm.

3. Matériau de frottement selon la revendication 1 ou 2, caractérisé en ce que les fibres sont choisies parmi le groupe des fibres de coton, de viscose, de lin, de polyacrylonitrile, de polyacrylonitrile préoxydées, de para-aramide, de méta-aramide, des fibres minérales telles que verre E-C-R, laine de roche, céramique.

4. Matériau de frottement selon la revendication 3, caractérisé en ce que du verre est incorporé au mat sous forme de silione, et/ou de roving, et/ou texturisé ou voluminisé.

5. Matériau de frottement selon la revendication 4, caractérisé en ce que les diamètres de fibres de verre sont compris entre 6 et 21 micromètres.

6. Matériau de frottement selon la revendication 5, caractérisé en ce que les fibres de verre ont subi un adhérisage, une imprégnation de résine phénolique, une imprégnation de caoutchouc.

7. Matériau de frottement selon l'une des revendications 1 à 6, caractérisé en ce que des charges poudreuses sont incorporées au mat.

8. Matériau de frottement selon la revendication 7, caractérisé en ce que lesdites charges poudreuses comprennent tout ou partie des éléments ou composés suivants: cuivre, laine de roche, caoutchouc nitrile en poudre, noir de carbone, hexaméthylène tétramine, gilsonite, litharge, résine mélamine, résine phénolique, soufre, cardolite, silicate de zirconium, sulfure de fer, alumine, latex, garnitures d'embrayages usagées réduites en poudre, poussières de rectification de garnitures de frottement, oxyde de zinc.

9. Procédé de réalisation d'un matériau de frottement pour frottement à sec, caractérisé par les étapes suivantes :
a) un mélange de fibres de même nature ou de matières différentes telles que définies en revendications 1 à 6, est réalisé dans un mélangeur ;
b) le mélange est cardé pour former un voile de carde ;
c) le voile de carde est nappé ;
d) du verre est incorporé au voile de carde au moment du nappage ;
e) le mat est pré-aiguilleté ou condensé.

10. Procédé selon la revendication 9, caractérisé en ce qu'entre les étapes b) et c) des charges pulvérulentes telles que définies en revendication 8 sont saupoudrées sur le voile de carde.

11. Procédé selon la revendication 9, caractérisé en ce que le cardage est effectué au moyen d'une carde type laine.

12. Procédé selon la revendication 10 ou 11, caractérisé en ce que le mat est mis à une épaisseur comprise entre 3 mm et 10 mm entre des plateaux chauffants.

13. Procédé selon la revendication 12, caractérisé en ce que la température est comprise entre 50°C et 100°C, et en ce que la pression est comprise entre 1 bar et 10 bars.

14. Procédé selon la revendication 12 ou 13, caractérisé en ce que la mat est découpé en bandes dans le sens largeur.

15. Procédé selon la revendication 14, caractérisé en ce que la largeur des bandes est comprise entre 100 mm et 450 mm.

16. Procédé selon la revendication 14 ou 15, caractérisé en ce que les bandes ainsi découpées sont soudées par lames chauffantes.

17. Procédé selon la revendication 16, caractérisé en ce que la température des lames est comprise entre 50°C et 100°C et en ce que le recouvrement des bandes ainsi soudées est compris entre 3 mm et 20 mm.

18. Procédé selon la revendication 16 ou 17, caractérisé en ce que la bande soudée est enroulée sur un enrouleur, et en ce que de cette bande est formé un tube dont le diamètre intérieur est obtenu par un mandrin à diamètre modulable, et dont le diamètre extérieur est obtenu par une longueur de défilement appropriée.

19. Procédé selon la revendication 18, caractérisé en ce qu'un anneau est découpé dans le tube ainsi réalisé.

20. Procédé selon la revendication 19, caractérisé en ce que l'anneau est placé dans le fond d'un moule et en ce qu'une cuisson sous pression est réalisée dans le moule.

21. Procédé selon la revendication 20, caractérisé en ce que la température de cuisson est comprise entre 150°C et 250°C et en ce que la pression appliquée sur le matériau varie entre 20 bars et 300 bars.

22. Disque de friction d'embrayage tournant mettant en oeuvre un frottement à sec, comportant au moins une garniture de frottement, caractérisé en ce que ladite garniture de frottement est réalisée en un matériau de frottement selon l'une des revendications 1 à 8.

23. Disque de friction d'embrayage tournant selon la revendication 22, caractérisé en ce que le matériau de frottement a été obtenu selon le procédé de l'une des revendications 9 à 21.
